Europäisches Patentamt

European Patent Office

Office européen des brevets

(11) Veröffentlichungsnummer: **0 418 624 A1**

## (12) EUROPÄISCHE PATENTANMELDUNG

(21) Anmeldenummer: 90116825.2

(22) Anmeldetag: 01.09.90

(51) Int. Cl.⁵: **F02B 53/10, F02B 53/12**

(30) Priorität: 18.09.89 US 408572

(43) Veröffentlichungstag der Anmeldung:
27.03.91 Patentblatt 91/13

(84) Benannte Vertragsstaaten:
DE ES FR GB IT

(71) Anmelder: **John Deere Technologies
International Inc.
John Deere Road
Moline Illinois 61265(US)**

(72) Erfinder: **Abraham, John
35 A Atherton Ct.
Wayne, New Jersey 07470(US)**
Erfinder: **Bracco, Frediano V.
81 McCosh Circle
Princeton, New Jersey 08540(US)**

(74) Vertreter: **Feldmann, Bernhard et al
DEERE & COMPANY European Office Patent
Department Steubenstrasse 36-42
W-6800 Mannheim 1(DE)**

(54) Drehkolbenmotor.

㊼ Bei einem Drehkolbenmotor (10) mit einem eine innere Lauffläche (24) aufweisenden Kolbengehäuse (12), einem in dem Kolbengehäuse (12) umlaufenden Drehkolben (18) und einer zwischen einer Piloteinspritzdüse (50) und einer Haupteinspritzdüse (60) im oberen Totpunktzenter des Kolbengehäuses (12) angeordneten Zündvorrichtung (52) ist eine zweite Zündvorrichtung (70) vorgesehen und derart im oberen Totpunktzenter angeordnet, daß sie sich mit Bezug auf die Drehrichtung des Drehkolbens (18) stromaufwärts der Haupteinspritzdüse (60) befindet.

Fig. 1

## DREHKOLBENMOTOR

Die Erfindung bezieht sich auf einen Drehkolbenmotor mit einem eine innere Lauffläche aufweisenden Kolbengehäuse, einem in dem Kolbengehäuse umlaufenden Drehkolben und einer zwischen einer Piloteinspritzdüse und einer Haupteinspritzdüse im oberen Totpunktzenter des Kolbengehäuses angeordneten Zündvorrichtung.

Bei diesem Drehkolben (US-A-4 083 329) wird der Brennstoff aus der Piloteinspritzdüse durch die Zündvorrichtung in Form einer einzigen Zündkerze gezündet. Die dadurch entstehende Flamme entzündet dann das Luft-Brennstoffgemisch in einer Ausnehmung im Drehkolben, wobei der Brennstoff in die Ausnehmung im wesentlichen durch die Haupteinspritzdüse eingespritzt wird. Das Vorhandensein eines fetteren und schlechter verbrennbaren Luft-Brennstoffgemisches in dem Zentrum der Ausnehmung verzögert jedoch die Flammenausbreitung von dem vorderen Ende der Ausnehmung zu ihrem rückwärtigen Ende. Hierdurch wird der Verbrennungsprozess verzögert und die Leistung des Drehkolbenmotors beeinträchtigt.

Andererseits ist es auch nicht mehr neu (US-A-3 980 054), zwei Zündkerzen im Totpunktzenter beiderseits der sogenannten kleinen Achse vorzusehen. Jedoch wird bei diesem Drehkolbenmotor der Brennstoff dem Lufteinlaßkanal gegenüber dem Totpunktzenter beigegeben. Eine Piloteinspritzung ist nicht vorgesehen, so daß es sich um ein vollkommen anderes System handelt.

Die mit der Erfindung zu lösende Aufgabe wird in einer verbesserten Verbrennung in einem Drehkolbenmotor gesehen. Diese Aufgabe ist dadurch gelöst worden, daß eine zweite Zündvorrichtung vorgesehen und derart im oberen Totpunktzenter angeordnet ist, daß sie sich mit Bezug auf die Drehrichtung des Drehkolbens stromaufwärts der Haupteinspritzdüse befindet. Auf diese Weise ist die Haupteinspritzdüse etwa mittig zwischen den beiden Zündvorrichtungen angeordnet, und die beim Zünden des aus der Piloteinspritzdüse eingespritzten Brennstoffes entstehende Flamme dient als Pilotflamme für den aus der Haupteinspritzdüse eingespritzten Brennstoff, so daß die zweite Zündvorrichtung das sich in einer Arbeitskammer befindliche Luft-Brennstoffgemisch entzündet. Im ganzen gesehen läßt sich mit dieser Anordnung die Verbrennung wesentlich erhöhen. Der Wirkungsgrad des Drehkolbenmotors wird erhöht, wozu vorteilhaft nach einem weiteren Merkmal der Erfindung die Längsachse der Haupteinspritzdüse mit Bezug auf die Umlaufebene des Drehkolbens geneigt angeordnet sein kann.

In der Zeichnung ist ein nachfolgend näher erläutertes Ausführungsbeispiel der Erfindung dargestellt. Es zeigt:

Fig. 1 einen Drehkolbenmotor im Bereich seines oberen Totpunktes und im Schnitt und

Fig. 2 einen Schnitt nach der Linie 2:2 in Fig. 1.

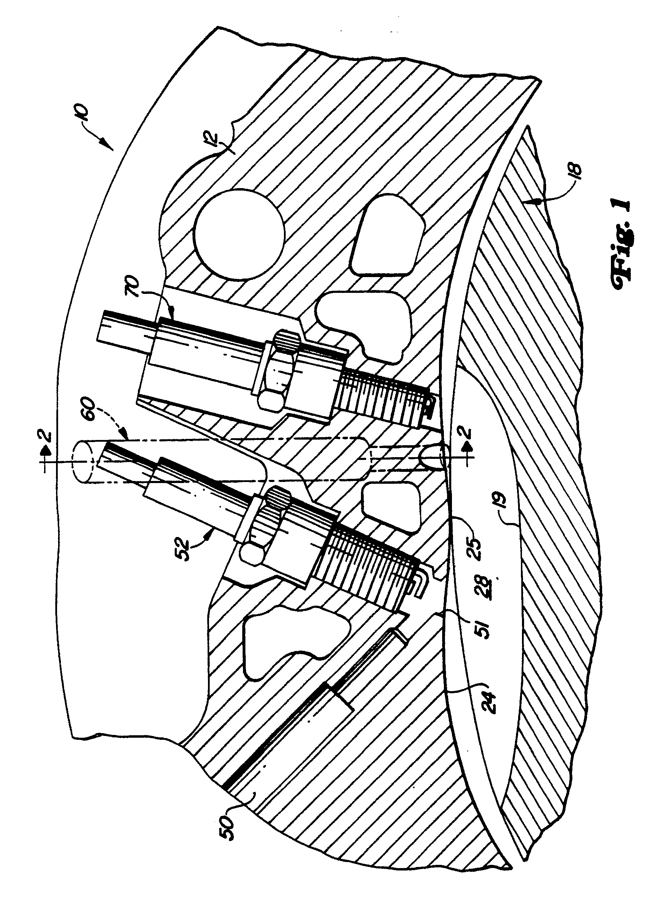

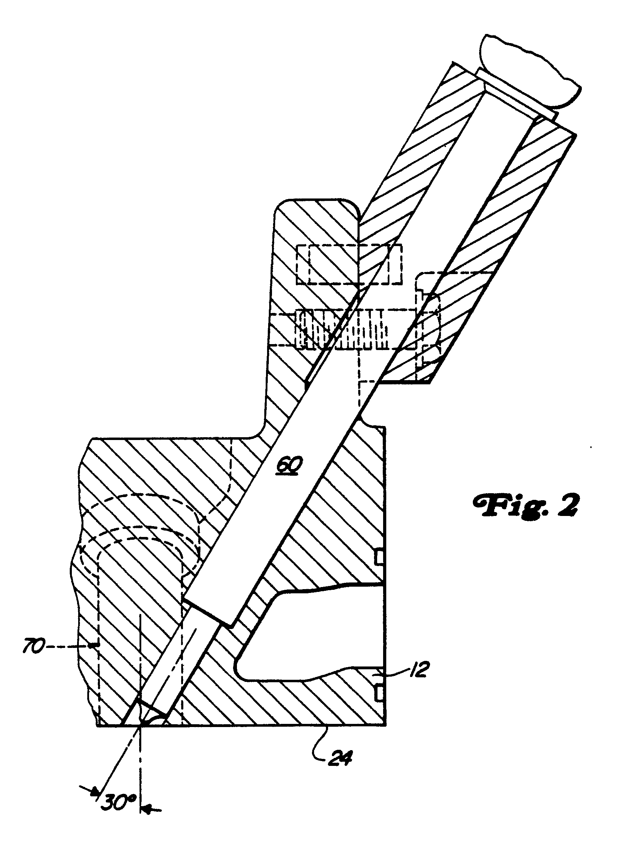

Ein in den Fig. 1 und 2 dargestellter Drehkolbenmotor 10 besteht aus zwei der Einfachheit halber nicht dargestellten und zueinander Querabstand aufweisenden Endgehäusen und einem mittigen Kolbengehäuse 12, die miteinander derart verbunden sind, daß sie einen Kolbenraum umschließen. In diesem Kolbenraum kann ein Drehkolben 18 umlaufen, der hierzu auf einem ebenfalls nicht dargestellten Teil einer exzentrischen Welle angeordnet ist, die ihrerseits in den Endgehäusen gelagert ist.

Eine peripherische innere Lauffläche 24 des mittig zwischen den Endgehäusen angeordneten Kolbengehäuses 12 hat ein zweiflügeliges Profil, das im wesentlichen als Epitrochoide ausgebildet ist. Die beiden Flügel treffen an der kleinen Achse bzw. der Verbindungsstelle 25 zusammen. Der Drehkolben 18 ist beim Ausführungsbeispiel dreieckförmig ausgebildet, und die zwischen seinen Ecken gebildeten Arbeitsflächen 28 sind jeweils mit einer muldenförmigen Ausnehmung 19 versehen.

Der Drehkolbenmotor 10 ist außerdem mit geeigneten Trieben zwischen dem Drehkolben 18 und dem Motorgehäuse versehen, die die relative Rotation des Drehkolbens steuern. Die Triebe sind in der Zeichnung allerdings nicht dargestellt und können in etwa so ausgebildet werden, wie es aus dem Dokument US-A-2 988 065 hervorgeht.

Nahe der Stelle 25, jedoch an ihrer stromabwärts liegenden Seite, ist in das Kolbengehäuse 12 eine Piloteinspritzdüse 50 eingesetzt. Das Auslaßende dieser Piloteinspritzdüse 50 findet sich in einer Aussparung 51, die zu der Lauffläche 24 offen ist, um Brennstoff in die jeweilige Arbeitskammer 28 einspritzen zu können, nachdem die Ladeluft in der entsprechenden Arbeitskammer fast ausreichend komprimiert ist und der Verbrennungsvorgang kurz bevorsteht. Eine erste Zündvorrichtung 52 in Form einer Zündkerze ist ebenfalls in das Kolbengehäuse 12 nahe der Stelle 25 und der Piloteinspritzdüse 50 eingesetzt. Die Elektroden dieser ersten Zündkerze sind so angeordnet, daß sie sich im Bereich des Auslaßendes der Piloteinspritzdüse 50 befinden und sich in die Aussparung 51 erstrecken. Die Lauffläche 24 ist natürlich ebenfalls im Bereich des offenen Endes der Aussparung 51 offen. Zusätzlich sind die Piloteinspritzdüse 50 und die Zündvorrichtung 52 derart angeordnet, daß wenigstens ein Teil des Brennstoffdampfes, der beim Einspritzvorgang aus der Piloteinspritzdüse 50 entsteht, nahe an den Elektroden der ersten Zündvorrichtung 52 vorbeistreicht, um durch die Zündvorrichtung 52 entzündet werden zu können.

Eine Haupteinspritzdüse 60 ist ebenfalls im Kolbengehäuse 12 nahe der Stelle 25, jedoch auf deren stromaufwärts liegender Seite, vorgesehen. Wie am besten aus der Fig. 2 ersichtlich ist, ist die Haupteinspritzdüse 60 mit Bezug auf die Umlaufebene des Drehkolbens 18 um etwa 30° geneigt angeordnet. Ebenso wie bei der Piloteinspritzdüse 50 soll der Einspritzvorgang aus der Haupteinspritzdüse 60 in die jeweilige Arbeitskammer 28 beginnen, nachdem die Ladeluft in der entsprechenden Arbeitskammer ausreichend komprimiert ist und der Verbrennungsvorgang, der zeitlich zu dem Einspritzvorgang aus der Piloteinspritzdüse abgestimmt ist, unmittelbar bevorsteht. Die zeitliche Abstimmung ist beispielsweise derart, daß bei geringen Motorlasten der Einspritzvorgang aus der Haupteinspritzdüse 60 in jede Arbeitskammer 28 kurzzeitig nach dem Einspritzvorgang aus der Piloteinspritzdüse 50 beginnt, wohingegen bei hohen Motorlasten der Einspritzvorgang aus der Haupteinspritzdüse 60 bereits kurzzeitig vor dem Einspritzvorgang aus der Piloteinspritzdüse 50 beginnt. Durch diese Maßnahme ist für den Einspritzvorgang aus der Haupteinspritzdüse 60 mehr Zeit vorhanden. Als Ergebnis ist festzuhalten, daß die von der Zündung des von der Piloteinspritzdüse 50 eingespritzten Brennstoffes herrührende Flamme eine Zündung des von der Haupteinspritzdüse eingespritzten Brennstoffes bewirkt. Diese Flamme wirkt damit als Pilotflamme für den aus der Haupteinspritzdüse 60 in die jeweilige Arbeitskammer 28 eingespritzten Brennstoff.

Eine zweite Zündvorrichtung 70 in Form einer zweiten Zündkerze ist nahe der Haupteinspritzdüse 60 an deren stromaufwärts liegender Seite in das Kolbengehäuse 12 eingesetzt, so daß die Haupteinspritzdüse 60 zwischen der ersten und zweiten Zündvorrichtung 52 und 70 zu liegen kommt. Die Piloteinspritzdüse 50 und die Zündvorrichtungen 52 und 70 sind zu der Umlaufebene des Drehkolbens 18 ausgerichtet.

Ein hier nicht dargestellter, jedoch in dem Dokument US-A-3 894 518 beschriebener Zündkreislauf ist für die erste Zündvorrichtung 52 vorgesehen und so gestaltet, daß die erste Zündkerze zündet, während Brennstoff aus der Piloteinspritzdüse 50 in die entsprechende Arbeitskammer 28 eingespritzt wird. Somit wird bereits ein Teil dieses eingespritzten Brennstoffes gezündet, und das Brennen dieses Teils zündet den verbleibenden Rest des aus der Piloteinspritzdüse austretenden Brennstoffes. Das Timing der Zündung der ersten Zündvorrichtung ist derart, daß die Zündung während des Einspritzvorgangs aus der Piloteinspritzdüse 50 in die jeweilige Arbeitskammer erfolgt, vorzugsweise während des anfänglichen Einspritzvorgangs. Die zweite Zündvorrichtung 70 hat die Aufgabe, die entflammbare Mischung auf der mit Bezug auf die Stelle 25 stromaufwärts liegenden Seite und stromaufwärts der fetteren und schlechter entflammbaren bzw. verbrennbaren Mischung in dem zentralen Teil der Ausnehmung zu zünden. Durch die beiden Zündvorrichtungen kann das Brennstoff-Luftgemisch besser gezündet werden, wodurch der Leistungsgrad des Drehkolbenmotors verbessert wird.

## Ansprüche

1. Drehkolbenmotor (10) mit einem eine innere Lauffläche (24) aufweisenden Kolbengehäuse (12), einem in dem Kolbengehäuse (12) umlaufenden Drehkolben (18) und einer zwischen einer Piloteinspritzdüse (50) und einer Haupteinspritzdüse (60) im oberen Totpunktzenter des Kolbengehäuses (12) angeordneten Zündvorrichtung (52), dadurch gekennzeichnet, daß eine zweite Zündvorrichtung (70) vorgesehen und derart im oberen Totpunktzenter angeordnet ist, daß sie sich mit Bezug auf die Drehrichtung des Drehkolbens (18) stromaufwärts der Haupteinspritzdüse (60) befindet.

2. Drehkolbenmotor nach Anspruch 1, dadurch gekennzeichnet, daß die Längsachse der Haupteinspritzdüse (60) mit Bezug auf die Umlaufebene des Drehkolbens (18) geneigt angeordnet ist.

**Fig. 1**

EP 0 418 624 A1

60

*Fig. 2*

70 - - -

12

24

30°

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | DE - B - 1 301 611 (ROLLS-ROYCE LTD.) * Fig. 1,7 * | 1 | F 02 B 53/10 F 02 B 53/12 |
| X | DE - A - 1 526 412 (ROLLS-ROYCE LTD.) * Fig. 1 * | 1 | |
| Y | | 2 | |
| Y | US - A - 4 029 058 (JONES) * Fig. 1,2,5 * | 2 | |
| D,A | US - A - 3 894 518 (GAVRUN) * Fig. 1,4 * | 1 | |
| D,A | US - A - 4 083 329 (MYERS) * Fig. 1,4 * | 1 | |

RECHERCHIERTE SACHGEBIETE (Int Cl⁵)

F 02 B 53/00

Der vorliegende Recherchenbericht wurde für alle Patentansprüche erstellt.

| Recherchenort | Abschlußdatum der Recherche | Prüfer |
|---|---|---|
| VIENNA | 23-11-1990 | FIETZ |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82